# EUROPÄISCHE PATENTSCHRIFT

(11) **EP 3 101 395 B1**
(45) Veröffentlichungstag und Bekanntmachung des Hinweises auf die Patenterteilung: **17.07.2019**
(21) Anmeldenummer: 16172189.9
(22) Anmeldetag: 31.05.2016
(51) Int. Cl.: G01F 23/00, G01F 23/26, G01N 35/10

(54) **VERFAHREN ZUR DETEKTION EINER SCHAUMGRENZE UND ENTSPRECHEND AUSGESTATTETE VORRICHTUNG**
A METHOD FOR DETECTING THE FOAM BOUNDARY AND A RESPECTIVELY EQUIPPED APPARATUS
PROCÉDÉ DE DETECTION D'UNE LIMITE DE MOUSSE ET DISPOSITIF ÉQUIPPÉ DE MANIÈRE CORRESPONDANTE

(30) Priorität: 02.06.2015 CH 7832015
(43) Veröffentlichungstag der Anmeldung: 07.12.2016
(60) Teilanmeldung: 19166596.7
(73) Patentinhaber: Tecan Trading AG, 8708 Männedorf (CH)
(72) Erfinder: SCHÖNI, Markus, 8606 Nänikon (CH); OTT, Philipp, 8496 Steg im Tösstal (CH); KAMM, Lars, 9718 Schänis (CH); ZBINDEN, Paul, 8633 Wolfhausen (CH)
(74) Vertreter: OK pat AG

(56) Entgegenhaltungen:
- EP-A1- 2 270 445
- EP-A2- 1 048 953
- US-A1- 2006 207 322
- US-A1- 2007 144 253

## Beschreibung

Die Erfindung betrifft ein Verfahren zur Detektion einer Schaumgrenze in einem Behälter. Ausserdem betrifft die Erfindung eine entsprechend ausgestattete Vorrichtung.

### HINTERGRUND DER ERFINDUNG

Es gibt zahlreiche Laborsysteme und medizinische, sowie pharmazeutische Geräte, die präzise Pipettieroperationen erfordern, um zufriedenstellende analytische Genauigkeit zu erhalten. Dafür muss der Füllstand in Reagenzgläsern, Titerplatten und anderen Flüssigkeitsbehältern genau ermittelt werden. Es gibt auch Anwendungen, bei denen es um die Detektion von Schaum-Flüssig-Phasengrenzen und Gas-Schaum-Phasengrenzen geht. Im Folgenden wird der Begriff der Phasengrenze sowohl für Übergänge zwischen gasförmigen und flüssigen Medien (Gas-Flüssig-Phasengrenze), für Gas-Schaum-Phasengrenzen als auch für Übergänge zwischen verschiedenen flüssigen Medien (Schaum-Flüssig-Phasengrenze) verwendet.

Besonders wenn es um die Automation von Mess- oder Versuchsabläufen geht, ist eine solche Ermittlung der Phasengrenze von Bedeutung. Die sogenannte Füllstandsermittlung erfolgt typischerweise mittels einer Detektion des Flüssigkeitsniveaus, d.h. es wird die Lage der Phasengrenze zwischen Luft und Flüssigkeit ermittelt. Dieser Vorgang wird auch als "Liquid Level Detection" (LLD) bezeichnet.

Im Stand der Technik sind verschiedene Verfahren zur Füllstandsermittlung bekannt, die auf unterschiedlichen physikalischen Prinzipien basieren, wie z.B. auf einer Detektion des von der Oberfläche der Flüssigkeit reflektierten Lichts, oder auf der Messung elektrischer Eigenschaften der Pipetten, wenn sie in Kontakt mit der Flüssigkeit gebracht werden. Da ein Gas und eine Flüssigkeit deutlich unterschiedliche Dielektrizitätskonstanten besitzen, kann die Gas-Flüssig-Phasengrenze auch über eine Kapazitätsänderung bestimmt werden. Eine Vorrichtung dafür wird z.B. in der US20070144253A1 beschrieben. Eine weitere Vorrichtung dafür wird z.B. in der US20060207322A1 vorgeschlagen.

Die Liquid Level Detection kommt z.B. in Pipettiergeräten zum Einsatz. Hier soll beim Ansaugen mit einer Pipette die Pipettiernadel so gering wie möglich in die zu pipettierende Flüssigkeit eingetaucht werden, um eine Verschmutzung mit Probenflüssigkeit so gering wie möglich zu halten. Beim Ansaugen wird die Pipettiernadel deshalb typischerweise nur wenige Millimeter unter das Flüssigkeitsniveau eingetaucht. Es muss aber sichergestellt werden, dass die Pipettiernadel genügend weit eingetaucht ist damit keine Luft angesaugt werden kann. Während des Ansaugvorganges wird die Pipettiernadel dann kontinuierlich dem absinkenden Flüssigkeitsspiegel nachgeführt, damit sie immer gleich tief in Bezug zum Flüssigkeitsniveau eingetaucht bleibt. Nach dem Ansaugen kann z.B. anhand des angesaugten Volumens und der Querschnittsfläche des Flüssigkeitsbehälters berechnet werden, auf welcher Höhe sich die Gas-Flüssig-Phasengrenze befinden sollte. Beim Austauchen der Pipettenspitze kann ein Austauchsignal mit der errechneten Position der Gas-Flüssig-Phasengrenze verglichen werden, um so den Pipettiervorgang zu verifizieren.

Einerseits ist also wünschenswert, die Pipettierspitze knapp unter der Flüssigkeitsoberfläche positionieren zu können. Anderseits kann der Füllstand von einem Flüssigkeitsbehälter zu einem anderen stark variieren, weshalb die Pipettierspitze in grossen Bereichen präzise positionierbar sein muss. Dafür ist es äusserst wichtig, die Flüssigkeitsoberfläche richtig und eindeutig detektieren zu können.

Die Zuverlässigkeit der Erkennung der Flüssigkeitsoberfläche mit den bekannten Verfahren ist aber in einigen Fällen nicht befriedigend, insbesondere im Fall von Flüssigkeiten, die anfällig sind für Schaumbildung.

Daher ist es wichtig, zwischen einer Schaum- und/oder Flüssigkeitskontaktierung eines in einem Behälter zustellbaren Fühlers (z.B. in Form einer Pipette) unterscheiden zu können.

Es sind auch Anwendungen denkbar, bei denen es nur um die Detektion einer Schaumgrenze geht.

### AUFGABE DER ERFINDUNG

Es stellt sich daher die Aufgabe, ein Verfahren zur Detektion einer Schaumgrenze bereitzustellen, das zuverlässig arbeitet und eine hohe Genauigkeit bietet.

Eine weitere Aufgabe der Erfindung ist, ein Verfahren für eine Detektion des Übergangs des Fühlers von Schaum zu Flüssigkeit bereitzustellen.

Eine weitere Aufgabe der Erfindung ist das Bereitstellen entsprechender Vorrichtungen.

### OFFENBARUNG DER ERFINDUNG

Die oben identifizierte technische Aufgabe der Erfindung wird durch ein Verfahren gelöst, dessen Merkmale dem Anspruch 1 zu entnehmen sind.

Insbesondere geht es um ein Verfahren zum Detektieren einer Schaumgrenze in einem Behälter einer Vorrichtung mittels einer kapazitiv arbeitenden Messvorrichtung mit einem Fühler, der bewegt werden kann, wobei mindestens ein Ausgangsignal durch die Messvorrichtung verarbeitet wird.
Das Verfahren umfasst die folgenden Schritte, die während des Ausführens einer Auf- oder Abwärtsbewegung des Fühlers in dem Behälter ausgeführt werden;
a. Durchführen eines Ladevorgangs durch das Vorgeben eines Eingangssignals, das an einer Messkapazität (auch als Gesamtkapazität bezeichnet) einen Ladevorgang bewirkt, wobei sich diese Messkapazität aus dem Fühler, der Luft, dem Schaum und der Flüssigkeit bildet,
b. Bereitstellen eines Ladesignals, das sich während des Ladevorgangs an der Messkapazität ergibt, an einem ersten Vergleicher und an einem zweiten Vergleicher, wobei der erste Vergleicher dazu ausgelegt ist ein erstes Ausgangssignal bereitzustellen, falls das Ladesignal eine erste Referenzspannung erreicht, und wobei der zweite Vergleicher dazu ausgelegt ist ein zweites Ausgangssignal bereitzustellen, falls das Ladesignal eine zweite Referenzspannung erreicht, die grösser ist als die erste Referenzspannung,
c. Entladen der Messkapazität,
d. Wiederholen der Schritte a. bis c.,
wobei das erste Ausgangssignal und das zweite Ausgangssignal im Rahmen eines Auswerteprozesses miteinander in Bezug gesetzt werden.

Insbesondere geht es um das Detektieren einer Gas-Flüssigkeitsgrenze und einer Gas-Schaumgrenze in einem Behälter einer Vorrichtung, die eine im Wesentlichen kapazitiv arbeitende Messvorrichtung umfasst, die das Ladesignal einer Messkapazität verarbeitet und erkennt, ob Flüssigkeit oder Schaum berührt wurde.

Durch periodisches Auf- und Entladen der Messkapazität (d.h. durch das Wiederholen der Schritte a. bis c.) geben der erste Vergleicher ein erstes PWM-Signal (auch Vergleicher-Ausgangssignal genannt) und der zweite Vergleicher ein zweites PWM-Signal (auch Vergleicher-Ausgangssignal genannt) aus. PWM steht für Pulsweitenmodulation.

Dabei sind die Impulsbreiten dieser beiden Ausgangssignale, insbesondere die Änderung der Impulsbreiten der Ausgangssignale zwischen ausgetauchtem und eingetauchtem Fühler von Interesse. Die Änderung des ersten Ausgangssignals kann mit einem vorgegebenen Faktor so multipliziert werden, dass das Produkt bei rein kapazitivem Verhalten des Mediums der Änderung des zweiten Ausgangssignals entspricht. Dies ist beim Eintauchen des Fühlers in eine einigermassen gut leitende Flüssigkeit der Fall. Befindet sich aber Schaum auf der Flüssigkeit, so kann durch die relativ hohe Impedanz des Schaumes die Flüssigkeitskapazität bei geeigneter Wahl der Entladezeit nicht vollständig entladen werden. Dies führt dazu, dass beim nachfolgenden Ladevorgang zu Beginn ein Rückstrom in die Grundkapazität fliesst. Das Fliessen eines Rückstroms wirkt sich vor allem zu Beginn der Ladekurve aus. Die mit dem vorgegebenen Faktor multiplizierte Impulsbreiten-Änderung des ersten Ausgangssignals kann sich somit im Vergleich zur Impulsbreiten-Änderung des zweiten Ausgangssignals verkürzen. Die Impulsbreiten-Änderung im Vergleich zur Impulsbreite des ausgetauchten Fühlers kann sogar negativ werden. Durch geeignete Wahl der Entladezeit und der Grundkapazität ist es somit möglich, zu unterscheiden, ob der Fühler in Flüssigkeit, oder in Schaum eingetaucht ist.

Eine Vorrichtung gemäss der Erfindung weist die Merkmale des unabhängigen Vorrichtungsanspruchs 9 auf.

Weitere Details sind den jeweiligen Unteransprüchen zu entnehmen.

### VORTEILHAFTE WIRKUNGEN

Der wichtigste Vorteil der Erfindung ist, dass bei der Zustellung eines Fühlers (z.B. in Form einer Pipette oder Nadel) eine Schaumgrenze sehr zuverlässig und genau detektiert werden kann. Es kann damit sichergestellt werden, dass z.B. eine entsprechend ausgestattete Vorrichtung korrekte Daten liefert und/oder dass z.B. ein automatisierter Vorgang ohne die Gefahr durchgeführt werden kann, dass nicht aufgrund einer Fehldetektion unvorhersehbare Dinge geschehen oder Aktionen ausgeführt werden, die der Situation nicht angemessen sind.

Ein weiterer Vorteil der Erfindung ist, dass zwischen Schaum- oder Flüssigkeitskontaktierung unterschieden werden kann, wobei sowohl die Detektion einer Schaumgrenze als auch die Detektion einer Flüssigkeitsgrenze nach Messansätzen erfolgt, die mess- bzw. schaltungstechnisch kompatibel sind.

### KURZE BESCHREIBUNG DER ZEICHNUNGEN

Das erfindungsgemässe Verfahren wird nun an Hand von schematischen, den Umfang der Erfindung nicht beschränkenden Zeichnungen von beispielhaften Ausführungsformen im Detail erläutert.
- Fig. 1: zeigt eine schematische Illustration des Detektionsverfahrens gemäss der vorliegenden Erfindung, die eine als Fühler dienende Pipette in drei unterschiedlichen Zustell-Tiefen a), b) und c) zeigt;
- Fig. 2A: zeigt ein schematisches Schaltungsdiagramm einer ersten Ausführungsform einer im Wesentlichen kapazitiv arbeitenden Vorrichtung, gemäss der vorliegenden Erfindung;
- Fig. 2B: zeigt ein schematisches Spannungs-Zeitdiagramm einer Ladekurve, wobei ein Eingangssignalgenerator der Vorrichtung nach Fig. 2A zum Einsatz gekommen ist, der hier ein periodisches rechteckförmiges Eingangssignal vorgibt (Anmerkung: falls die Gesamtkapazität mit einem Konstantstrom aufgeladen werden würde, würde die Ladekurve der Fig. 2B einen linearen Verlauf haben);
- Fig. 3: zeigt eine schematische Ersatzschaltung einer weiteren Ausführungsform der vorliegenden Erfindung;
- Fig. 4: zeigt ein schematisches Spannungs-Zeitdiagramm in dem der Kurvenverlauf bei nicht in Flüssigkeit eingetauchtem Fühler (hier als gestrichelter Kurvenverlauf K1 dargestellt) und bei einem in Flüssigkeit eingetauchten Fühler (hier als Kurvenverlauf K2 mit durchgezogener Linie dargestellt) gezeigt sind;
- Fig. 5: zeigt ein schematisches Spannungs-Zeitdiagramm bei nicht in Schaum eingetauchtem Fühler (hier als gestrichelter Kurvenverlauf K3 dargestellt) und bei einem in Schaum eingetauchten Fühler (hier als Kurvenverlauf K4 mit durchgezogener Linie dargestellt) (Anmerkung: bei nicht eingetauchtem Fühler wäre die Verbindung zum Widerstand R_{F} in Fig. 3 unterbrochen);
- Fig. 6: zeigt ein schematisches Schaltungsdiagramm einer weiteren Ausführungsform einer Vorrichtung der vorliegenden Erfindung;
- Fig. 7: zeigt ein schematisches Schaltungsdiagramm einer weiteren Ausführungsform einer Vorrichtung der vorliegenden Erfindung, wobei diese Vorrichtung auf dem Prinzip der Fig. 6 aufbaut;
- Fig. 8: zeigt ein schematisches Schaltungsdiagramm einer weiteren Ausführungsform einer Vorrichtung der vorliegenden Erfindung, wobei diese Vorrichtung auf dem Prinzip der Figuren 6 und 7 aufbaut.

### DETAILLIERTE BESCHREIBUNG DER BEVORZUGTEN AUSFÜHRUNGSFORMEN

Im Folgenden werden vorteilhafte Ausführungsformen der Erfindung beschrieben, wobei es sich um beispielhafte Ausführungsformen handelt. Diese umfassen sowohl verschiedene Ausbildungen der Gesamterfindung, als auch Baugruppen und Einzelteile der Erfindung. Grundsätzlich lassen sich die beschriebenen Baugruppen und Einzelteile der verschiedenen Ausführungsformen miteinander kombinieren, respektive die Baugruppen und Einzelteile einzelner Ausführungsformen lassen sich durch die Baugruppen und Einzelteile anderer Ausführungsformen ersetzen. Die hierbei gebildeten Kombinationen können kleinere, jedem Fachmann geläufige und daher nicht weiter beschriebene Anpassungen bedingen, zum Beispiel um ein Zusammenwirken oder Ineinandergreifen der Baugruppen und Einzelteile zu ermöglichen.

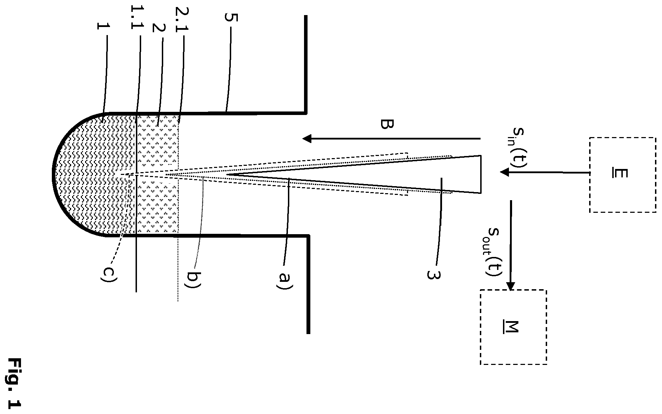

Der Begriff Phasengrenze wird verwendet für Grenzen zwischen zwei oder mehr Medien, die unterschiedliche Dielektrizitätskonstanten besitzen. Speziell geht es um Gas-Schaum-Phasengrenzen 2.1, Schaum-Flüssig-Phasengrenzen 1.1, wie z.B. in Fig. 1 angedeutet, und um Gas-Flüssig-Phasengrenzen.

Der Begriff Modul wird hier verwendet, um eine Funktionsgruppe zu umschreiben, die in Hardware, Software oder als Kombination aus Hard- und Software realisiert ist.

Der Begriff "Kennung" wird hier verwendet für einen Code, ein Codewort, ein Signal, eine Speichereintragung der vorgenommen wird oder für ein Flag, das gesetzt wird.

Im Zusammenhang mit der vorliegenden Erfindung ist verschiedentlich von Geräten die Rede. Es handelt sich vorzugsweise um Laborgeräte und um andere Systeme, Anlagen, Apparate, Handhabungszentren und dergleichen, die mit Mitteln zur Ermittlung einer Phasengrenze ausgestattet sind. Die erfindungsgemässe Vorrichtung 100 ist ein Element oder eine Komponente eines solchen Laborgeräts. Ein Laborgerät kann zum Beispiel mehrere identische Vorrichtungen 100 oder mehrere verschiedene Vorrichtungen 100 der Erfindung umfassen.

Das erfindungsgemässe Verfahren ist bei allen Ausführungsformen zum Detektieren der Kontaktierung eines Fühlers 3 (z.B. einer als Fühler dienenden Pipette oder Nadel) mit einem Medium in einem (Flüssigkeits-) Behälter 5 ausgelegt und zum Unterscheiden, ob es sich um eine Kontaktierung mit Flüssigkeit 1 oder mit Schaum 2 handelt. Im Folgenden wird auf die Verwendung von Pipetten Bezug genommen, wobei auch andere (Pipetten-) Spitzen, Nadeln, Röhrchen und dergleichen als Fühler 3 geeignet sind und in allen Ausführungsformen der Erfindung eingesetzt werden können.

Im Folgenden wird auf das Ausführen einer Zustellbewegung B Bezug genommen. Eine solche Zustellbewegung B kann eine Abwärts- oder eine Aufwärtsbewegung des Fühlers 3 in dem Behälter 5 beschreiben.

Zum Zweck des Detektierens wird vorzugsweise eine Pipette 3 verwendet, die in Richtung einer Schaumgrenze 2.1 und/oder in Richtung einer Flüssigkeitsgrenze 1.1 in den Behälter 5 hinein zustellbar ist.

Fig. 1 stellt eine schematische Illustration des Grundprinzips des Detektionsverfahrens der vorliegenden Erfindung dar, worin die Pipette 3 in drei unterschiedlichen Zustell-Tiefen entlang der Zustellrichtung B gezeigt ist, nämlich: a) vor dem Durchstossen der Schaumgrenze 2.1; b) nach dem Durchstossen der Schaumgrenze 2.1; und c) nach dem Durchstossen der Flüssigkeitsgrenze 1.1. Während der Zustellbewegung B der Pipette 3 in Richtung der Schaumgrenze 2.1 und/oder der Flüssigkeitsgrenze 1.1 wird ein periodisches Eingangssignal sᵢₙ(t) an die Pipette 3 angelegt. Wenn die Spitze der Pipette 3 z.B. die Oberfläche 2.1 von Schaum 2 berührt, bildet der Schaum 2 zusammen mit der Flüssigkeit 1 im Behälter 5 einen Teil des als Messelektrode dienenden Fühlers 3, respektive es ergibt sich eine Messkapazität (auch als Gesamtkapazität bezeichnet) aus der Pipette 3, der Luft, dem Schaum 2 und der Flüssigkeit 1.

In Fig. 1 sind auch die grundlegenden Elemente eines ersten beispielhaften Ersatzschaltbilds gezeigt, wobei die gezeigte Ersatzschaltung einen Eingangssignalgenerator E und eine Messvorrichtung M umfasst. Das erwähnte Eingangssignal sᵢₙ(t) wird durch den Eingangssignalgenerator E bereitgestellt und ergibt an der Pipette 3 ein entsprechendes Ladesignal, während das Ausgangssignal sₒᵤₜ(t), das am Fühler 3 abgegriffen wird, durch die Messvorrichtung M verarbeitet wird.

Diese Aspekte werden im Folgenden anhand spezifischer Ausführungsformen detailliert beschrieben.

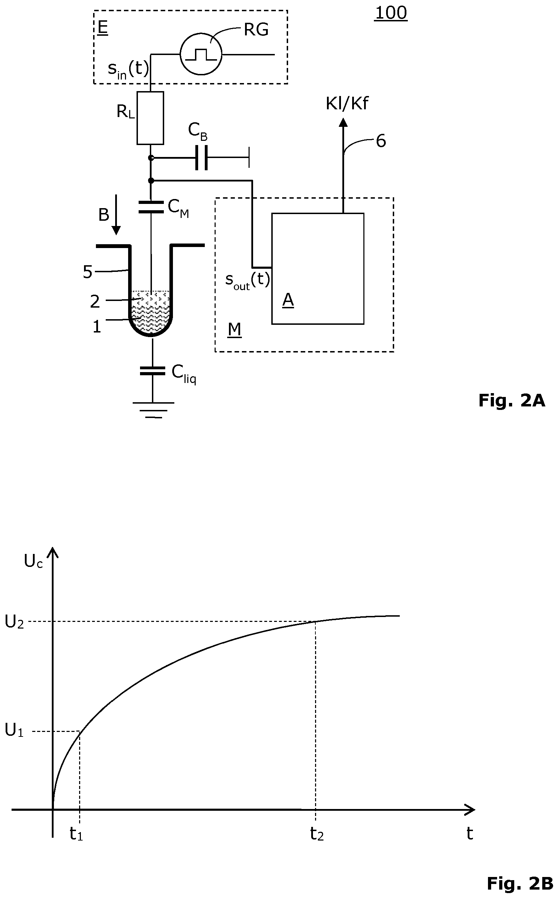

Fig. 2A zeigt ein schematisches Schaltungsdiagramm einer ersten beispielhaften Ausführungsform des Eingangssignalgenerators E und der kapazitiv arbeitenden Messvorrichtung M, die im Zusammenhang mit der vorliegenden Erfindung zum Einsatz kommen kann. Die Pipette 3 dient als Fühler und bildet einen Kondensator zusammen mit der Schaum/Flüssigkeitsoberfläche, wobei die Luft das Dielektrikum zwischen den Platten dieses Kondensators bildet. Die Spitze der Pipette 3 dient quasi als erster Teil eines Messkondensators mit zwei Kondensatorplatten, die Flüssigkeitsoberfläche 1.1 oder Schaumoberfläche 2.1 (je nach Situation) bildet den zweiten Teil mit einem dazwischen liegenden Luft-Dielektrikum. Beim Verändern der Position der Pipette 3 (durch eine Bewegung B) wird auch der Plattenabstand der Kondensatorplatten verändert. In Fig. 2A ist daher die Pipette 3 durch zwei parallele Kondensatorplatten symbolisiert und die entsprechende Kapazität wird als hier Serienkapazität C_{M} bezeichnet. Die Kapazität der Flüssigkeit 1, ev. kombiniert mit Schaum 2 in Behälter 5, wird als Kapazität C_{liq} bezeichnet und ist in Fig. 2A auch durch zwei parallele Kondensatorplatten symbolisiert, die hier unterhalb des Behälters 5 sitzen.

Es ergibt sich eine Grundkapazität C_{B} (in Fig. 2A auch durch zwei parallele Kondensatorplatten symbolisiert), die typischerweise die Leitungskapazitäten, die Fühlerkapazität und die Kapazitäten von Schaltungsteilen, die sich im Eingangssignalgenerator E und in der Auswerteschaltung A befinden, umfasst. Die Grundkapazität C_{B} setzt sich hier beispielsweise zusammen aus ca. 100pF Kabelkapazität, ca. 50pF Schaltungskapazität und ca. 2pF Nadelkapazität. Die Gesamtkapazität C_{T} (nicht gezeigt) umfasst sowohl die Grundkapazität C_{B}, die Serienkapazität C_{M}, als auch die kapazitiven Einflüsse (Kapazität C_{liq} genannt) der Flüssigkeit 1 und/oder des Schaums 2.

Beim Berühren der Flüssigkeitsoberfläche 1.1 mit der Spitze der Pipette 3 ergibt sich ein detektierbarer Sprung der Gesamtkapazität C_{T}. Dies ist auch beim Berühren der Schaumoberfläche 2.1 der Fall.

Die Vorrichtung 100 und/oder der Eingangssignalgenerator E umfasst beispielsweise einen Rechteckspannungsgenerator RG (auch Rechteckimpulsgenerator genannt) zum Erzeugen eines periodischen rechteckförmigen Eingangssignals sᵢₙ(t). Statt einer Rechteckspannung könnte auch ein anderes Signal, z.B. ein periodisches dreieckförmiges Eingangssignal sᵢₙ(t) oder aber auch z.B. ein Auf- und Entladen mittels Konstantstrom oder ähnlich verwendet werden.

Der Rechteckspannungsgenerator RG kann funktionell als Teil eines Eingangssignalgenerators E betrachtet werden, der das Eingangssignal sᵢₙ(t) erzeugt. Dieses Eingangssignal sᵢₙ(t) erzeugt über den Ladewiderstand R_{L} ein entsprechendes Ladesignal an dem Fühler 3 (an der Pipette 3), der bei allen Ausführungsformen als Messelektrode dient. Konkret ausgedrückt, ergibt sich dieses Ladesignal während des Ladevorgangs an der bereits erwähnten Gesamtkapazität C_{T}.

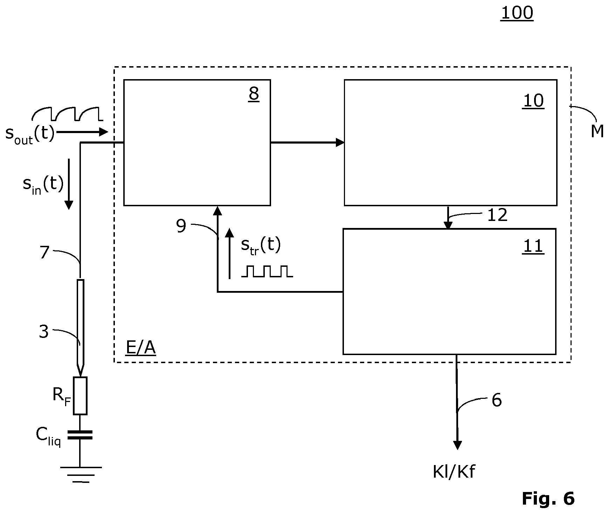

Selbstverständlich können auch andere, an sich bekannte Arten von Spannungsgeneratoren oder Stromgeneratoren für das erfindungsgemässe Verfahren verwendet werden, wie z.B. in den Figuren 6, 7 und 8 gezeigt.

Es ist nicht unbedingt erforderlich, ein klassisches Rechtecksignal als Eingangssignal sᵢₙ(t) zu erzeugen. Alternativ kann z.B. auch ein Signal erzeugt werden, das einem Rechtecksignal angenähert ist. Statt Rechteckpulsen können bei allen Ausführungsformen auch andere Sprungsignale eingesetzt werden. Alle diese Signale und Signalformen werden hier zusammenfassend als periodische Eingangssignale sᵢₙ(t) bezeichnet.

Fig. 2A zeigt anhand eines beispielhaften Schaltungsdiagramms, dass während des Ladevorgangs die Gesamtkapazität C_{T} z.B. über den (Lade-) Widerstand R_{L} mittels des Rechteckimpulsgenerators RG periodisch aufgeladen und entladen werden kann.

Während das Eingangssignal sᵢₙ(t) von dem Eingangssignalgenerator E an den Fühler 3, respektive an die Gesamtkapazität C_{T} angelegt wird, wird das Ausgangssignal sₒᵤₜ(t) des Fühlers 3 mittels einer Auswerteschaltung A verarbeitet/ausgewertet, wie im Folgenden beschrieben. Von Interesse sind insbesondere Veränderungen der Kurvenform der Ladekurven der Ladesignale an dem Fühler 3, respektive an der Gesamtkapazität C_{T}. Zu diesem Zwecke ist die Auswerteschaltung A bei allen Ausführungsformen schaltungstechnisch mit dem Fühler 3 verbindbar.

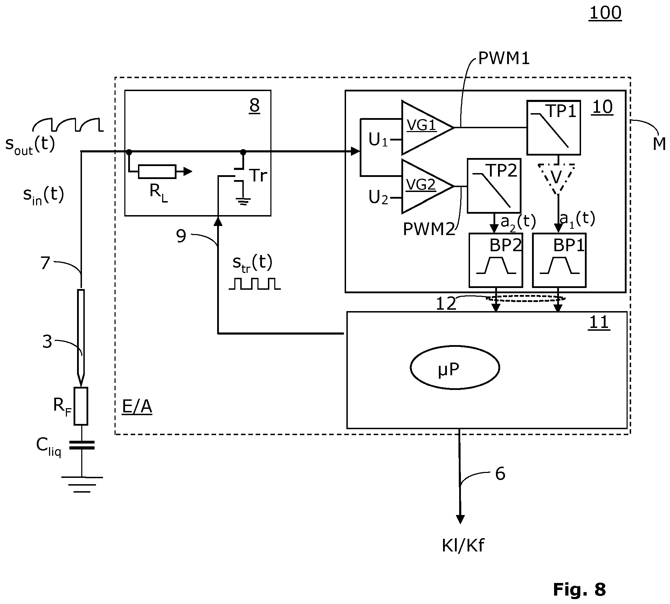

Die Auswerteschaltung A, respektive die Messvorrichtung M, kann bei allen Ausführungsformen einen Verstärker V zur Verstärkung des Ausgangssignals sₒᵤₜ(t) umfassen. Ein Verstärker V kann zum Beispiel bei den Ausführungsformen der Figuren 6, 7 und 8 im Bereich nach dem Tiefpassfilter TP1 zum Einsatz kommen, da der Vergleicher VG1 ein Signal verarbeitet, das deutlich kleiner sein kann als das Signal, das der Vergleicher VG2 verarbeitet. In Fig. 8 ist beispielhaft ein entsprechender Verstärker V gezeigt.

In Fig. 2B ist ein schematisches Spannungs-Zeitdiagramm der Ladekurve (des Ladesignals) der Messvorrichtung M mit dem Eingangssignalgenerator E der Fig. 2A dargestellt. Es handelt sich bei der Kurve nach Fig. 2B um die typische Ladekurve eines Kondensators. Das Ladeverhalten, respektive der Zeitverlauf dieser Ladekurve, ist proportional zum Produkt aus der Gesamtkapazität C_{T} und dem Widerstand.

Gemäss Erfindung wiederholt sich der Lade- und Entladevorgang mit einer hohen Taktrate. Vorzugsweise ist der Eingangssignalgenerator E bei allen Ausführungsformen dazu ausgelegt das rechteckförmige Eingangssignal sᵢₙ(t) mit einer Taktrate bereitzustellen, die grösser ist als 10 kHz. Vorzugsweise kann das entsprechende Rechtecksignal eine Frequenz von 100 kHz und mehr haben.

Das Auswerten des Ausgangssignals sₒᵤₜ(t) im Rahmen einer Flüssigkeitsniveaudetektion (hier als weiterer Auswerteprozess P2 bezeichnet) umfasst die Messung/Ermittlung einer ersten Ladezeit t₁ bis zum Erreichen einer ersten Spannung U₁ und die Messung/Ermittlung einer zweiten Ladezeit t₂ bis zum Erreichen einer zweiten Spannung U₂, wie in Fig. 2B gezeigt.

Dadurch, dass gemäss Erfindung beispielsweise ein rechteckförmiges Signal sᵢₙ(t) angelegt wird, kommt es nach dem Ladevorgang (der in Fig. 2B beispielhaft gezeigt ist) zu einem Entladevorgang der Gesamtkapazität C_{T}. Falls sich in dem Behälter 5 nur eine Flüssigkeit 1 befindet, so wird die Gesamtkapazität C_{T} komplett entladen, bevor ein erneuter Ladevorgang beginnt. Dieser erneute Ladevorgang beginnt wiederum bei null.

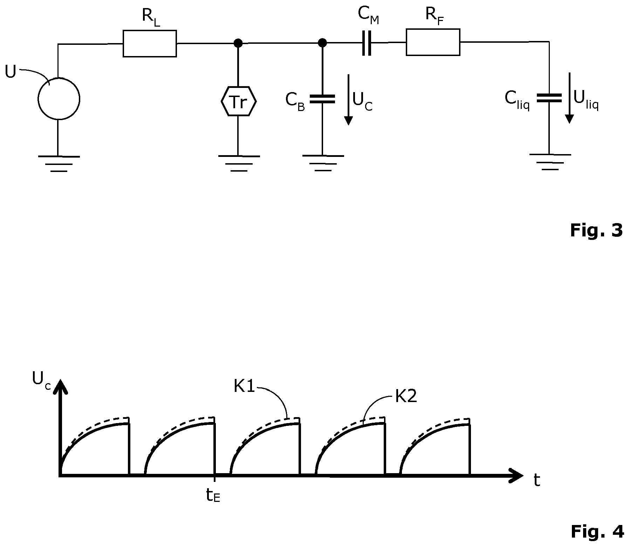

In Fig. 3 ist eine vereinfachte Ersatzschaltung gezeigt, um diese Vorgänge beschreiben zu können. Links ist eine Spannungsquelle U gezeigt, die beim periodischen Betätigen eines Transistors Tr oder eines anderen Entladungsschalters beispielsweise ein periodisches Rechtecksignal erzeugt und anlegt. Die Flüssigkeit 1 wird in dieser vereinfachten Ersatzschaltung durch die Kapazität C_{liq} gegen Erdung symbolisiert. Der Schaum 2 wird in dieser vereinfachten Ersatzschaltung als ein Serienwiderstand R_{F} dargestellt, der in Reihe zur Flüssigkeitskapazität C_{liq} und der bereits erwähnten Serienkapazität C_{M} liegt. Falls kein Schaum 2 im Behälter 5 vorhanden ist, so gilt R_{F} = 0. Das Entladen der Gesamtkapazität C_{T} wird durch einen Transistor Tr bewirkt, der als Entladungsschalter dient. Es kann beispielsweise ein Field-Effect Transistor als Transistor Tr zum Einsatz kommen.

Beim periodischen Laden und Entladen ergibt sich ein Kurvenverlauf nach Fig. 2B, wobei sich dieser Kurvenverlauf periodisch wiederholt, wie in Fig. 4 angedeutet. Der Kurvenverlauf K1 in Fig. 4 stellt den Verlauf der Lade-EntladeKurve dar, falls sich der Fühler 3 nicht in Flüssigkeit 1 befindet. Die Entladezeit ist mit t_{E} bezeichnet. Falls der Fühler 3 in Flüssigkeit 1 taucht, die sich in dem Behälter 5 befindet, kommt die Flüssigkeitskapazität C_{liq} zu der Grundkapazität C_{B} hinzu. Rechnerisch sind in diesem Fall die Werte der beiden Kapazitäten wie folgt zu addieren: C_{T} = C_{liq} + C_{B}. Dadurch ändert sich der Verlauf der Lade-Entlade-Kurve, wie in Fig. 4 schematisch durch den Kurvenverlauf K2 gezeigt. Durch ein geeignetes Auswerten des Unterschiedes der beiden Kurvenverläufe K1 und K2 (z.B. mittels zweier Vergleicher), kann man das Eintauchen des Fühlers 3 in eine Flüssigkeit 1 detektieren. Das Auswerten der beiden Kurvenverläufe K1 und K2 kann zum Beispiel durch das Erzeugen und Vergleichen von pulsweitenmodulierten Signalen erfolgen, wobei das pulsweiten-modulierte Signal bei nicht eingetauchtem Fühler 3 eine andere Pulsweite hat als das pulsweiten-modulierte Signal bei eingetauchtem Fühler 3. Ob die Pulsweite grösser oder kleiner ist hängt von der Polarität des nachgeschalteten Vergleichers ab.

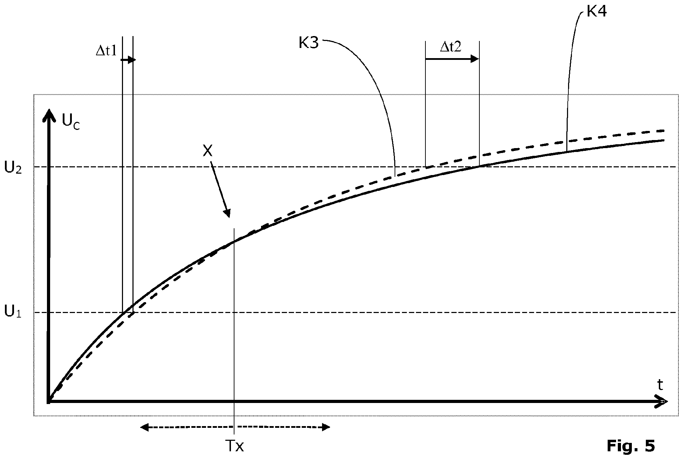

Falls sich in dem Behälter 5 Schaum 2 befindet, so liefert eine Betrachtung der Ladekurven ein Signal wie beispielhaft in Fig. 5 gezeigt. Der Kurvenverlauf K3 in Fig. 5 stellt den Verlauf der Lade-Kurve dar, falls sich der Fühler 3 nicht im Schaum 2 befindet (hier auch als ausgetauchter Zustand bezeichnet). Falls der Fühler 3 in den Schaum 2 taucht (hier auch als eingetauchter Zustand bezeichnet), der sich in dem Behälter 5 befindet (Kurve K4), kommt die Serienschaltung aus dem Schaumwiderstand R_{F}, der Serienkapazität C_{M} (C_{M} kann nach dem Berühren vernachlässigt werden, sie entspricht also einem Kurzschluss) und der Flüssigkeitskapazität C_{liq} zu der Grundkapazität C_{B} hinzu. Wird die Entladezeit t_{E} genügend kurz gewählt, bleibt wegen des relativ hochohmigen Schaumwiderstands R_{F} nach dem Entladen eine bestimmte Restladung in der Flüssigkeit 1 zurück, während die Grundkapazität C_{B} durch die Schaltung vollständig entladen wird. Zu Beginn der nächsten Aufladung fliesst dadurch zu Beginn ein Strom von der Ladung in C_{liq} der Flüssigkeit zurück in die Grundkapazität C_{B} der Schaltung. Dieser Strom addiert sich zum Ladestrom von R_{L}. Erst wenn die Ladespannung der Grundkapazität C_{B} den gleichen Spannungspegel wie die Spannung der Flüssigkeitskapazität erreicht (d.h. erst wenn U_{C} = U_{liq}), fliesst wieder Strom in die Flüssigkeit 1 (Zeitpunkt Tx in Fig. 5).

Dieser Effekt wird durch die Erfindung ausgenutzt, indem die Auswerteschaltung A bei allen Ausführungsformen vorzugsweise zwei Vergleicher VG1 und VG2 umfasst. Verglichen mit dem Signal K3 des ausgetauchten Fühlers 3, schaltet der Vergleicher VG1, dessen Schaltschwelle bei U₁ liegt, früher und VG2, dessen Schaltschwelle bei U2 liegt, später. Von Interesse sind also die Zeitänderungen Δt1 und Δt2. Der Vergleich dieser Zeitänderungen Δt1 und Δt2 lässt eine Aussage darüber zu, ob das mit dem Fühler 3 berührte Medium nur aus Flüssigkeit 1 besteht, oder ob Schaum 2 berührt wurde.

Dabei sind die Impulsbreiten des ersten Vergleicher-Ausgangssignals PWM1 und des zweiten Vergleicher-Ausgangssignals PWM2, insbesondere die Änderung Δt1 und Δt2 der Impulsbreiten dieser Vergleicher-Ausgangssignale PWM1, PWM2 beim Berühren des Mediums von Interesse. Die Änderung Δt1 des ersten Vergleicher-Ausgangssignals PWM1 kann mit einem vorgegebenen Faktor k so multipliziert werden, dass das Produkt bei rein kapazitivem Verhalten des Mediums der Änderung Δt2 des zweiten Vergleicher-Ausgangssignals PWM2 entspricht. Dies ist beim Berühren des Fühlers 3 mit einer einigermassen gut leitenden Flüssigkeit 1 der Fall. Befindet sich aber Schaum 2 auf der Flüssigkeit 1, so kann durch die relativ hohe Impedanz des Schaumes 2 die Flüssigkeitskapazität C_{liq} bei geeigneter Wahl der Entladezeit t_{E} (siehe Fig. 4) nicht vollständig entladen werden. Dies führt dazu, dass beim nachfolgenden Ladevorgang zu Beginn ein Rückstrom in die Grundkapazität C_{B} fliesst. Das Fliessen eines Rückstroms wirkt sich vor allem zu Beginn der Ladekurve aus. Die mit dem vorgegebenen Faktor k multiplizierte Impulsbreiten-Änderung des ersten Vergleicher-Ausgangssignals PWM1 kann sich somit im Vergleich zur Impulsbreiten-Änderung des zweiten Vergleicher-Ausgangssignals PWM2 verkürzen. Die Impulsbreiten-Änderung kann sogar negativ werden. Durch geeignete Wahl der Entladezeit t_{E} und der Grundkapazität C_{B} ist es somit möglich, zu unterscheiden, ob der Fühler 3 in Flüssigkeit 1, oder in Schaum 2 eingetaucht ist.

In Fig. 5 sind in einer vergrösserten Ansicht zwei beispielhafte Kurven gezeigt. Der Kurvenverlauf K3 in Fig. 5 stellt den Verlauf der Ladekurve dar, falls sich der Fühler 3 nicht in Schaum 2 befindet (ausgetauchter Zustand). Falls der Fühler 3 jedoch in Schaum 2 eingetaucht ist, so hat die Restladung des vorhergehenden Ladevorgangs in der Gesamtkapazität C_{T} einen Einfluss auf das Verhalten beim nächsten Ladevorgang. Der Verlauf der entsprechenden Kurve K4 ist daher etwas anders als der Verlauf der Kurve K3. Vereinfacht dargestellt, hat die Kurve K4 anfangs eine höhere Steigung als die Kurve K3. Es ergibt sich in einem Bereich X (siehe Fig. 5) ein Schnittpunkt zwischen den beiden Kurven K3 und K4.

Aus der Fig. 5 können die folgenden beiden Bedingungen B1 und B2 abgeleitet werden.
Bedingung B1: das Ausgangssignal sₒᵤₜ der in Schaum eingetauchten Pipettiernadel (Kurve K4 in Fig. 5) steigt in einem Anfangsbereich (Zeitfenster kleiner Tx) schneller an als das Ausgangssignal sₒᵤₜ der noch nicht eingetauchten Pipettiernadel (Kurve K3 in Fig. 5);
Bedingung B2: das Ausgangssignal sₒᵤₜ der in Schaum eingetauchten Pipettiernadel (Kurve K4 in Fig. 5) steigt in einem Bereich nach dem Anfangsbereich (Zeitfenster grösser Tx) langsamer an als das Ausgangssignal sₒᵤₜ der noch nicht eingetauchten Pipettiernadel (Kurve K3 in Fig. 5).

Der relative Verlauf der beiden Kurven K3 und K4 kann wie folgt erklärt werden. Zu Beginn eines Aufladezyklus hat die Flüssigkeitskapazität C_{liq} immer noch eine Restladung von dem zeitlich vorhergehenden Aufladezyklus. Das liegt einerseits an dem relativ grossen Widerstand des Schaumes R_{F} und andererseits daran, dass die Entladezeit bewusst kurz gewählt wurde, um ein komplettes Entladen zu verhindern. Daher wird die Flüssigkeitskapazität C_{liq} zuerst entladen bis die Spannungen U_{C} und U_{liq} dasselbe Spannungsniveau erreichen (d.h. es gilt: U_{C} = U_{liq}). Dann fliesst der Strom in die positive Richtung. Dadurch ergibt sich der Schnittpunkt X zum Zeitpunkt Tx der beiden Kurven K3 und K4, wie in Fig. 5 gezeigt.

Die Erfindung basiert somit auf dem Ansatz, bei einem Schaumaufkommen die Flüssigkeitskapazität C_{liq} bewusst nicht komplett zu entladen. Mit anderen Worten, der Schaltungsaufbau der Vorrichtung 100 und die beeinflussbaren Parameter (z.B. die Entladezeit) werden so gewählt, dass in der Flüssigkeitskapazität C_{liq} beim Entladen stets eine Restladung verbleibt, bevor der neue Ladezyklus beginnt. Man nutzt somit bewusst eine Restladung in der Flüssigkeit 1, um beim eingetauchten Fühler 3 in Schaum 2 einen Signalverlauf zu erhalten, der durch die Schaltung A zuverlässig auswertbar ist. Die Restladung der Flüssigkeitskapazität C_{liq} ist eine Funktion des Widerstands R_{F} und der Entladezeit t_{E}.

Die Entladezeit t_{E} ist somit einer der möglichen Parameter, die vorzugsweise bei allen Ausführungsformen der Vorrichtung 100 eingestellt oder anderweitig vorgegeben werden können.

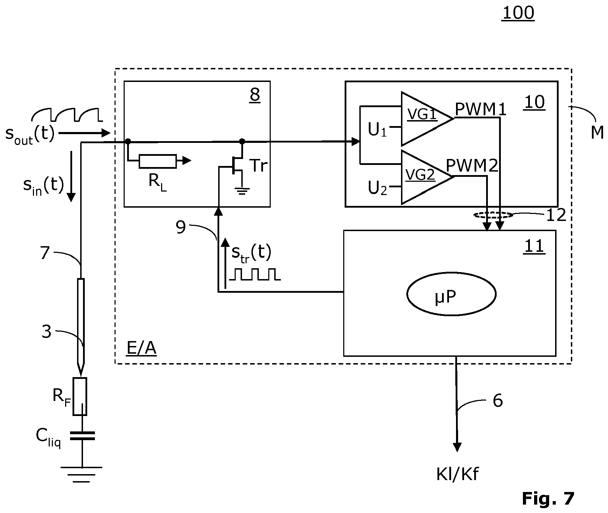

Gemäss Erfindung hängt die Wahl der Entladezeit t_{E} von der Leitfähigkeit der Flüssigkeit 1 ab. D.h. bei bevorzugten Ausführungsformen der Erfindung wird das Einstellen oder die Vorgabe der Entladezeit t_{E} unter Berücksichtigung der Leitfähigkeit der Flüssigkeit 1 vorgenommen. Ausserdem kommen vorzugsweise bei allen Ausführungsformen zwei Vergleicher (siehe beispielsweise VG1 und VG2 in Fig. 7) zum Einsatz, um das Vorhandensein von Schaum 2 zuverlässig und reproduzierbar detektieren zu können.

Durch den Einsatz von zwei Vergleichern, kann ermittelt werden, dass sich links vom Schnittpunkt X (d.h. im Anfangsbereich t < Tx) eine negative Zeitverzögerung Δt1 und rechts vom Schnittpunkt X (d.h. im Bereich t > Tx) eine positive Zeitverzögerung Δt2 ergeben hat. In Fig. 5 sind diese beiden Zeitverzögerungen Δt1 und Δt2 schematisch eingezeichnet. Die Zeitverzögerung Δt2 wird beispielsweise bei einer Spannung U2 und die Zeitverzögerung Δt1 wird beispielsweise bei einer Spannung U1 ermittelt. D.h. ein Vergleicher VG2 hat eine Vergleichsschwelle bei der Spannung U2 und ein Vergleicher VG1 hat eine Vergleichsschwelle bei der Spannung U1 (siehe auch Fig. 7 und Fig. 8).

Aus Fig. 5 kann somit abgeleitet werden, dass Δt1 < 0 und Δt2 > 0 gelten muss, um von einer Schaumdetektion ausgehen zu können. Ausserdem gilt optional bei allen Ausführungsformen der folgende zusätzliche Zusammenhang: Δt1 < Δt2.

Die Schaumdetektion, respektive die Auswertung des/der Ausgangssignale sₒᵤₜ(t) (bzw. der Vergleicher-Ausgangssignale PWM1, PWM2) wird hier auch als (Schaum-) Auswerteprozess P1 bezeichnet.

Aus der Fig. 4 und Fig. 5 ist zu entnehmen, dass sich sowohl beim Eintauchen in Flüssigkeit 1 als auch beim Eintauchen in Schaum 2 stets eine positive Zeitverzögerung Δt2 ergibt (vereinfacht ausgedrückt, da in Fig. 4 die Kurve K1 oberhalb der Kurve K2 und in Fig. 5 die Kurve K3 oberhalb der Kurve K4 liegt), die durch den Vergleicher VG2 ermittelt werden kann. An dem anderen Vergleicher VG1, der bei allen Ausführungsformen zum Zwecke der Schaumdetektion im Rahmen des (Schaum-) Auswerteprozesses P1 zum Einsatz kommt, ist beim Eintauchen des Fühlers 3 in eine Flüssigkeit 1 auch eine positive Zeitverzögerung Δt2 zu messen. Es gilt hier also an den beiden Vergleichern VG1 und VG2 der Zusammenhang: Δt2 > 0 und Δt1 > 0.

Beim Eintauchen des Fühlers 3 in Schaum 2 hingegen, gilt an den beiden Vergleichern VG1 und VG2 der Zusammenhang: Δt1 < 0 und Δt2 > 0.

Vorzugsweise kommt bei allen Ausführungsformen der Erfindung eine Auswerteschaltung A zum Einsatz, die dazu auslegt ist, um
- eine sprunghafte Änderung des Kurvenverlaufes (Bemerkung: zwei direkt aufeinanderfolgende Zyklen geben noch keine genügende Messsicherheit) des Ausgangsignals sₒᵤₜ(t) von sₒᵤₜ₁(t) auf sₒᵤₜ₂(t) oder umgekehrt (Kurven K4 und K3) qualitativ auszuwerten (qualitative Auswertung), und/oder
- um eine sprunghafte Änderung des Kurvenverlaufes des Ausgangsignals sₒᵤₜ(t) von sₒᵤₜ₁(t) auf sₒᵤₜ₂(t) oder umgekehrt (Kurven K4 und K3) quantitativ auszuwerten (quantitative Auswertung).

Der schaltungstechnische Aufwand ist vor allem bei einer quantitativen Auswertung sehr gross, da es sich um sehr kleine Signaländerungen handelt, die erfasst und ausgewertet werden müssen. Bei einer quantitativen Auswertung kommt erschwerend hinzu, dass es einige Einflussgrössen gibt, die von Detektionsfall zu Detektionsfall zu deutlichen Änderungen der zu messenden und zu vergleichenden Grössen führen.

Dieses Auswerten kann bei allen Ausführungsformen in einer Auswerteschaltung A der Vorrichtung 100 erfolgen. Als Ergebnis gibt die Auswerteschaltung A beispielweise eine Kennung Kl heraus, bzw. sie stellt eine Kennung Kl bereit, die von einer anderen Schaltung oder einem Computer abgerufen werden kann. Die Kennung Kl zeigt an, dass eine Phasengrenze zwischen Luft und Flüssigkeit 1 oder zwischen Luft und Schaum 2 detektiert wurde. Flüssigkeit 1 und Schaum 2 kann im Rahmen eines optionalen Auswerteprozesses P1 unterschieden werden. Ein entsprechender Auswerteprozess P1 kann beispielweise eine Kennung Kf herausgeben, wobei Kf = 1 z.B. das Vorhandensein von Schaum 2 und Kf = 0 das Nicht-Vorhandensein von Schaum 2 anzeigt.

Bei allen Ausführungsformen gemäss der Erfindung kommt eine Auswerteschaltung A zum Einsatz, die mindestens zwei parallel geschaltete Vergleicher VG1 und VG2 umfasst, die eine qualitative Auswertung ermöglichen, wie bereits angedeutet. D.h. diese parallel geschalteten Vergleicher VG1 und VG2 ermöglichen es, zwei zeitlich auseinanderliegende Ausgangssignale sₒᵤₜ₁(t) und sₒᵤₜ₂(t) miteinander in Bezug zu setzen. Alternativ zu der Zeitmessung bis zum Erreichen einer bestimmten Spannung, kann bei allen Ausführungsformen die Auswerteschaltung A so ausgelegt sein, dass diese den zeitlichen Stromverlauf auswertet.

In Fig. 6 ist das schematische Schaltbild einer weiteren Ausführungsform der Erfindung gezeigt. Die Vorrichtung 100 umfasst im Falle dieser Ausführungsform eine Messvorrichtung/-schaltung M, in der die Auswerteschaltung A und der Eingangssignalgenerator E zusammengelegt sind.

Die Messvorrichtung/-schaltung M umfasst einen gemeinsamen Signalpfad 7, der als Speisung des Fühlers 3 und als Signal-Abgriff des Fühlers 3 dient. Alle Ausführungsformen können einen gemeinsamen Signalpfad 7 umfassen.

Vorzugsweise kommt bei allen Ausführungsformen eine abgeschirmte Leitung als Signalpfad 7 zum Einsatz. Ein erstes Schaltungsmodul 8 dient hier zum periodischen Laden und Entladen des Fühlers 3 und der anderen Kapazitäten der Anordnung. Das Laden und Entladen des Fühlers 3 wird beispielsweise mit einer periodischen Rechtecksignalfolge vorgenommen, wie bereits beschrieben. Diese Rechtecksignalfolge wird hier durch ein Schaltelement Tr erzeugt und über den Signalpfad 7 an den Fühler 3 angelegt (wie in Fig. 3 gezeigt). Das Schaltelement Tr und der (Lade-) Widerstand R_{L} können Teil des Schaltungsmoduls 8 sein. Das Schaltelement Tr wird im gezeigten Ausführungsbeispiel durch ein Triggersignal sₜᵣ(t) gespeist, das z.B. über einen Signalpfad 9 an das Schaltungsmodul 8 angelegt wird. In Fig. 6 ist neben dem Signalpfad 9 ein beispielhaftes Triggersignal sₜᵣ(t) gezeigt. Dieses Signal bewirkt das Schliessen und Öffnen des Schaltelements Tr. Solange das Schaltelement Tr geschlossen ist, besteht ein Kurzschluss gegen Masse und es kommt zum teilweisen (im Falle einer Schaumdetektion) oder vollständigen (im Falle einer Flüssigkeitsdetektion) Entladen der Kapazitäten, wie bereits beschrieben. Sobald das Schaltelement Tr wieder öffnet, beginnt ein neuer Ladevorgang. Dieser Vorgang wiederholt sich mit einer sehr hohen Taktrate, die im Bereich ≥ 10 kHz und vorzugsweise im Bereich ≥ 100 kHz liegt. Dieser sich periodisch wiederholende Lade- und Entladevorgang erzeugt einen Kurvenverlauf des Ausgangssignals sₒᵤₜ(t), wie in Fig. 6 oberhalb des Signalpfades 7 gezeigt.

Die Messvorrichtung/-schaltung M umfasst bei allen Ausführungsformen eine Auswerteschaltung A, die mit zwei parallel geschalteten Vergleichern VG1, VG2 ausgestattet ist. Bei dem Ausführungsbeispiel der Fig. 6 befinden sich beide Vergleicher in dem zweiten Schaltungsmodul 10. Die Beschaltung der beiden Vergleicher VG1, VG2 in dem zweiten Schaltungsmodul 10 ist so ausgelegt, dass ein relativer Vergleich zweier Ausgangssignale sₒᵤₜ₁(t), sₒᵤₜ₂(t) möglich ist. Durch das Miteinander in Bezug setzen, respektive durch das Vergleichen zweier Ausgangssignale sₒᵤₜ₁(t), sₒᵤₜ₂(t) wird ermittelt, ob der folgende Zusammenhang vorliegt: Δt1 < 0 (erste Bedingung B1 genannt) und Δt2 > 0 (zweite Bedingung B2 genannt).

Die Messvorrichtung/-schaltung M umfasst vorzugsweise bei allen Ausführungsformen ein Kontrollmodul 11, wie in Fig. 6 gezeigt. Dieses Kontrollmodul 11 kann so ausgelegt sein, dass es eine Kennung Kf (Kf ist eine Kennung, um Schaum 2 von Flüssigkeit 1 unterscheiden zu können) ausgibt, falls der beschriebene Zusammenhang vorliegt, d.h. falls die erste Bedingung B1 und die zweite Bedingung B2 erfüllt sind. Diese Kennung Kf kann zum Beispiel an einem Ausgang 6 (wie auch in Fig. 2A) bereitgestellt werden. Die bereits erwähnte Kennung Kl kann auch an dem Ausgang 6 oder an einem anderen Ausgang bereitgestellt werden.

Das Kontrollmodul 11 wird vorzugsweise von dem Schaltungsmodul 10 mit einem oder mehreren Signalen versorgt, wie in Fig. 6 durch den Signalpfad 12 symbolisiert.

Vorzugsweise ist das Kontrollmodul 11 bei allen Ausführungsformen mit einem Prozessor µP ausgestattet (siehe Fig. 7), um vordefinierte Prozesse abzuarbeiten und um Entscheidungen treffen und Reaktionen auslösen zu können, wie z.B. das Ausgeben der Kennung Kf für die Unterscheidung von Flüssigkeit 1 und Schaum 2 und/oder Kl für die Detektion einer Luft-Flüssigkeit oder einer Luft-Schaum-Grenze.

Das Kontrollmodul 11 kann bei allen Ausführungsformen so ausgelegt sein, dass es die Kontrolle des Lade- und Entladevorgangs übernimmt, wie in Fig. 6 durch den Signalpfad 9 und das Triggersignal sₜᵣ(t) gezeigt. Vorzugsweise ist durch das Kontrollmodul 11 die Dauer des Entladevorgangs beeinflussbar, um eine Restladung in der Kapazität C_{liq} zu halten, die für eine zuverlässige Schaumdetektion erforderlich ist.

Die Fig. 7 zeigt ein schematisches Schaltungsdiagramm einer weiteren Ausführungsform einer Vorrichtung 100 der vorliegenden Erfindung, wobei diese Vorrichtung 100 auf dem Prinzip der Fig. 6 aufbaut.

Das Schaltungsmodul 8 umfasst einen Transistor Tr, der als Schaltelement dient. Dieser Transistor Tr wird hier von dem Triggersignal sₜᵣ(t) geschaltet, das von dem Kontrollmodul 11 bereitgestellt wird. Weiterhin kann das Schaltungsmodul 8 den (Lade-) Widerstand R_{L} umfassen, wie schematisch angedeutet (statt R_{L} wäre es auch möglich eine Konstantstromquelle einzusetzen). Der Signalpfad 7 ist im gezeigten Beispiel bis zum Schaltungsmodul 10 durchverbunden, um dort die beiden Vergleicher VG1 und VG2 parallel zu speisen. D.h. die beiden Vergleicher VG1 und VG2 sind parallel geschaltet. Der erste Vergleicher VG1 vergleicht das Ausgangssignal sₒᵤₜ(t) mit einer Spannung U1 (siehe auch Fig. 5) und der zweite Vergleicher VG2 vergleicht das Ausgangssignal sₒᵤₜ(t) mit einer Spannung U2, wobei U1 < U2. Nach jedem der Vergleicher kann/können beispielsweise ein Tiefpassfilter und/oder weitere Schaltungsblöcke (z.B. ein Verstärker V) folgen. Auf der Ausgangsseite (in Fig. 7 rechts von den Vergleichern VG1, VG2) wird jeweils ein pulsweiten-moduliertes Signal (PWM1 und PWM2) zur Verfügung gestellt. Diese beiden Vergleicher-Ausgangssignale PWM1, PWM2 werden durch das Kontrollmodul 11 verarbeitet, um zu prüfen, ob die Bedingungen B1 = Δt1 < 0 und B2 = Δt2 > 0 erfüllt sind. Falls diese Bedingungen B1 und B2 erfüllt sind, so gibt das Kontrollmodul 11 z.B. die Kennung Kf=1 aus, um so die Detektion von Schaum 2 anzuzeigen.

Im Folgenden werden weitere Details erläutert, die bei jeder der Ausführungsformen Berücksichtigung finden können. Vorzugsweise wird eine einzelne Ladekurve nicht direkt mit der zeitlich nächsten Ladekurve verglichen. Die Veränderung der Ladekurve und damit die entsprechende Pulsweitenänderung sind nämlich relativ klein. Die kann daher von einem herkömmlichen Prozessor µP (der Teil der Schaltung 11 sein kann) nur mit Aufwand gemessen werden. Zudem ist das Signal-Rausch-Verhältnis unter Umständen ungünstig.

Vorzugsweise wird daher bei allen Ausführungsformen eine Mittelung über mehrere Ladekurven vorgenommen, wie im Folgenden beschrieben. Ein entsprechendes Schaltungsbeispiel, das auf den Figuren 6 und 7 aufbaut, ist in Fig. 8 gezeigt. Die Erläuterungen zu den Figuren 6 und 7 sind hier analog anwendbar. Jedes der beiden PWM-Signale PWM1 und PWM2 wird über je einen Tiefpassfilter TP1, TP2 in je ein Analogsignal a₁(t), a₂(t) gewandelt. Diese Tiefpassfilter TP1, TP2 sitzen im Bereich hinter den Vergleichern VG1 und VG2, wie in Fig. 8 gezeigt. Durch die Tiefpassfilter TP1, TP2 wird auch die Taktfrequenz aus den Signalen vollständig herausgefiltert. Optional kann z.B. nach dem Tiefpassfilter TP1, wie in Fig. 8 durch ein strichliert umrandetes Schaltungssymbol dargestellt, oder nach dem Bandpassfilter BP1 ein Verstärker angeordnet sein. Die so entstandenen Analogsignale a₁(t), a₂(t) ändern ihren Wert beim Ein- resp. Austauchen des Fühler 3 ebenfalls nur in einem sehr geringen Spannungsbereich so, dass ein direktes Auswerten dieser Änderungen nur mit hochauflösenden Analog-Digital-Wandlern möglich ist.

Gemäss Erfindung wird hingegen vorzugsweise die Spannungsänderung ausgewertet/verarbeitet und der Offset ausgeblendet, da dieser - bestimmt durch die Gesamtkapazität C_{T} - viel grösser ist und ein direkt nachgeschalteter Verstärker schon bei geringer Verstärkung übersteuern würde. Daher kann bei allen Ausführungsformen über je ein nachgeschaltetes Bandpassfilter BP1, BP2 der Gleichspannungsanteil der Analogsignale a₁(t), a₂(t) durch eine in Serie geschaltete Kapazität entkoppelt und das Nutzsignal gleichzeitig verstärkt werden. Vorzugsweise wird das Signal des Vergleichers VG1 um einen fixen Faktor (Faktor k) mehr verstärkt, so dass bei einer reinen Flüssigkeits-Berührung zwei gleich grosse und gleich polarisierte Signale am Ausgang der beiden Bandpassfilter BP1, BP2 entstehen (siehe Fig. 8).

Bei der Berührung von Schaum 2 hingegen ist dann aus den schon beschriebenen Gründen das Ausgangssignal a₁(t) an BP1, welches der Schaumerkennung dient, meist umgekehrt gepolt.

Beim Herabbewegen des Fühlers 3 ändert sich die Gesamtkapazität C_{T} nur sehr langsam. Daher entsteht an den beiden Bandpassfiltern BP1, BP2 kaum ein Ausgangsignal, es sei denn, der Fühler 3 wird sehr schnell bewegt. Sobald aber der Fühler 3 in das Medium eintaucht, ergibt sich eine sehr schnelle Kapazitätsänderung, welche nun mittels der beiden Bandpassfilter BP1, BP2 deutlich erfassbar ist. Für die Bestimmung, ob der Fühler 3 in ein Medium eingetaucht oder aus einem Medium ausgetaucht ist, wird vorteilhaft das Ausgangssignal des Bandpassfilters BP2 ausgewertet, der das Signal PWM2 verarbeitet, das von denjenigen Vergleicher VG2 stammt, der mit der höheren Referenzspannung U₂ arbeitet. Das Auswerten des Ausgangssignals des Bandpassfilters BP2 erfolgt indem ermittelt wird, ob dieses Ausgangssignal einen bestimmten Mindestwert (Schwellenwert) erreicht.

Dieser Mindestwert (Schwellenwert) wird vorzugsweise bei allen Ausführungsformen abhängig von der Leitfähigkeit der Flüssigkeit 1 gewählt. Der Vergleich, der beim Auswerten erforderlich ist, kann beispielsweise über einen weiteren Vergleicher (nicht gezeigt) erfolgen oder er kann z.B. durch den Prozessor µP durchgeführt werden. Falls ein solcher weiterer Vergleicher zum Einsatz kommt, so sitzt dieser z.B. auf der Ausgangsseite des Bandfilters BP2. Falls der Prozessor µP das Vergleichen durchführt, so werden das/die Signale über den Signalpfad 12 an den Prozessor µP übermittelt.

Erst jetzt, nach dem Erkennen einer Detektion wird nun auch das Ausgangssignal des anderen Bandpassfilters BP1- des mit der tieferen Referenzspannung erzeugten PWM-Signals PWM1 ausgewertet, um dieses mit dem anderen Ausgangssignal des Bandpassfilters BP2 zu vergleichen. Ist dieses gegenphasig, so kann klar davon ausgegangen werden, dass es sich um eine Schaumdetektion handelt. Ist es gleichphasig, aber deutlich kleiner, so kann ebenfalls auf eine Schaumdetektion gedeutet werden. Dies kann z.B. bei sehr gut leitenden Flüssigkeiten 1 der Fall sein, wo der Kreuzungspunkt X unterhalb von beiden Komparator-Pegeln U1 und U2 (siehe Fig. 5) liegt. Sehen hingegen beide Ausgangssignale nahezu gleich aus, kann von einer reinen Flüssigkeitsberührung ausgegangen werden.

Die Vorrichtung 100 kann bei allen Ausführungsformen beispielsweise eine Kennung Kl und/oder Kf ausgeben, bzw. sie kann eine Kennung Kl und/oder Kf bereitstellen, die von einer anderen Schaltung oder einem Computer abgerufen werden kann. Das Bereitstellen der entsprechenden Kennungen ist in Fig. 2A und in den Figuren 6, 7 und 8 durch einen Pfeil 6 mit dem Bezugszeichen Kl/Kf symbolisiert. Je nach Aufbau kann die Vorrichtung 100 auch unterscheiden, ob der Fühler 3 in Flüssigkeit 1 oder in Schaum 2 eingetaucht wurde. In diesem Fall kann die Vorrichtung 100 bei allen Ausführungsformen beispielsweise eine Kennung Kf=0 für Flüssigkeit 1 und Kf=1 für Schaum 2 ausgeben, bzw. sie kann eine entsprechende Kennung Kl bereitstellen. Das Bereitstellen der entsprechenden Kennung Kf ist optional.

Diese Kennungen können bei allen Ausführungsformen an einem gemeinsamen Ausgang 6 oder auch an separaten Ausgängen der Vorrichtung 100 bereitgestellt werden.

Die Vorrichtung 100 kann bei allen Ausführungsformen eine analoge elektrische Schaltung und/oder eine digitale Schaltung mit einem Prozessor beinhalten.

Falls die Kontaktierung des Fühlers 3 mit Schaum 2 erkannt wurde, kann optional bei allen Ausführungsformen eine weitere "Untersuchung" folgen während der Fühler 3 weiter in die vorherige Richtung bewegt wird, um eine nachfolgende (beim Abwärtsbewegen unterhalb des Schaumes 2 liegende oder beim Aufwärtsbewegen oberhalb des Schaumes 2 liegende) Flüssigkeitsgrenze 1.1 erkennen zu können.

Bei allen Ausführungsformen der Erfindung kann das Schaltungsprinzip, das allen Schaltungen gemäss der Figuren zu Grunde liegt, auch umgekehrt werden. In diesen Figuren liegt jeweils der Flüssigkeitsbehälter 5 auf Masse und es werden Signale (Eingangssignale (sᵢₙ(t) genannt) an den Fühler 3 angelegt. Beim Umkehren des Schaltungsprinzips würde der Fühler 3 auf Masse gelegt und es werden Signale (Eingangssignale (sᵢₙ(t) genannt) an den Flüssigkeitsbehälter 5 angelegt. In diesem Fall bedarf es unter Umständen gewisser Anpassungen auf Seiten der Schaltungen E und A.

Alternativ sind auch Schaltungen möglich, die sich nicht auf Masse beziehen, wie oben beschrieben. Eine solche alternative Schaltung kann beispielsweise einen kapazitiven Spannungsteiler in Form einer Messbrücke umfassen. Es sind auch Schaltungen möglich, die bei einem rechteckförmigen Eingangssignal sᵢₙ(t) den Verlauf einer Stromkurve auswerten, oder die eine Spannungskurve bei einem vorgegebenen Strom auswerten. Weiterhin ist es möglich die Restspannung in der Gesamtkapazität C_{T} nach jeder Entladung und vor der jeweils nachfolgenden erneuten Aufladung auszuwerten. Auch derartige Schaltungen dienen der Realisierung bzw. Implementierung der vorliegenden Erfindung.

**Bezugszeichen**

| | |
|---|---|
| Flüssigkeit | 1 |
| Flüssiggrenze | 1.1 |
| Schaum | 2 |
| Schaumgrenze | 2.1 |
| Fühler | 3 |
| | |
| (Flüssigkeits-)Behälter | 5 |
| Ausgang | 6 |
| Signalpfad | 7 |
| erstes Schaltunqsmodul | 8 |
| Signalpfad | 9 |
| zweites Schaltungsmodul | 10 |
| Kontrollmodul | 11 |
| Signalpfad | 12 |
| | |
| Vorrichtung | 100 |
| | |
| Auswerteschaltung | A |
| Analogsignale | a₁(t), a₂(t) |
| Bewegung | B |
| Erster Bandpassfilter | BP1 |
| zweiter Bandpassfilter | BP2 |
| Erste Zeitverzögerung / Änderung des ersten Ausgangssignals | Δt1 |
| zweite Zeitverzögerung / Änderung des zweiten Ausgangssignals | Δt2 |
| Eingangssignalgenerator | E |
| Kapazität der Flüssigkeit | C_{liq} |
| Grundkapazität | C_{B} |
| Serienkapazität | C_{M} |
| Gesamtkapazität | C_{T} |
| Faktor | K |
| Kurven, Kurvenverläufe | K1, K2, K3, K4 |
| Kennung für Luft-Flüssigkeit und Luft-Schaum | Kl |
| Kennung zur Unterscheidung von Schaum und Flüssigkeit | Kf |
| Messvorrichtung/-schaltung | M |
| (Schaum-) Auswerteprozess | P1 |
| Weiterer Auswerteprozess | P2 |
| pulsweiten-modulierte Signale / Vergleicher-Ausgangssignale | PWM1, PWM2 |
| Rechteckspannungsgenerator | RG |
| Schaum-Widerstand | R_{F} |
| (Lade-)Widerstand | R_{L} |
| Eingangssignal | sᵢₙ(t) |
| Ausgangsignal (allgemein) | sₒᵤₜ(t) |
| erstes Ausgangsignal (für ausgetauchten Fühler) | sₒᵤₜ(t) |
| zweites Ausgangsignal (für eingetauchten Fühler) | sₒᵤₜ₂(t) |
| Triggersignal | sₜᵣ(t) |
| Zeit | t |
| Entladezeit | t_{E} |
| Erster Tiefpassfilter | TP1 |
| Zweiter Tiefpassfilter | TP2 |
| Transistor (FET) | Tr |
| Zeitpunkt am Schnittpunkt X | Tx |
| Spannungsquelle | U |
| Erste Spannung / erstes Referenzsignal | U₁ |
| zweite Spannung / zweites Referenzsignal | U₂ |
| Spannung an der Kapazität | U_{C} |
| Spannung an der Flüssigkeits-Kapazität | U_{liq} |
| Prozessor | µP |
| Verstärker | V |
| Erster Vergleicher | VG1 |
| zweiter Vergleicher | VG2 |
| Schnittpunkt | X |

## Patentansprüche

1. Verfahren zum Detektieren einer Schaumgrenze (2.1) in einem Behälter (5) einer Vorrichtung (100) mittels einer kapazitiv arbeitenden Messvorrichtung (M) mit einem Fühler (3), der bewegt werden kann, wobei mindestens ein Ausgangssignal (sₒᵤₜ(t)) durch die kapazitiv arbeitende Messvorrichtung (M) verarbeitet wird, wobei das Verfahren die folgenden Schritte umfasst, die während des Ausführens einer Auf- oder Abwärtsbewegung (B) des Fühlers (3) in dem Behälter (5) ausgeführt werden;
a. Durchführen eines Ladevorgangs durch das Vorgeben eines Eingangssignals (sᵢₙ(t)), das an einer Gesamtkapazität (C_{T}) einen Ladevorgang bewirkt, wobei sich die Gesamtkapazität (C_{T}) aus dem Fühler (3), Luft, Schaum (2) und Flüssigkeit (1) bildet,
b. Bereitstellen des mindestens einen Ausgangssignals (sₒᵤₜ₁(t), sₒᵤₜ₂(t)) an einem ersten Vergleicher (VG1) und an einem zweiten Vergleicher (VG2), wobei der erste Vergleicher (VG1) dazu ausgelegt ist ein erstes Vergleicher-Ausgangssignal (PWM1) bereitzustellen, falls das mindestens eine Ausgangssignal (sₒᵤₜ₁(t), sₒᵤₜ₂(t)) eine erste Referenzspannung (U₁) erreicht, und wobei der zweite Vergleicher (VG2) dazu ausgelegt ist ein zweites Vergleicher-Ausgangssignal (PWM2) bereitzustellen, falls das mindestens eine Ausgangssignal (sₒᵤₜ₁(t), sₒᵤₜ₂(t)) eine zweite Referenzspannung (U₂) erreicht,
c. Entladen des Fühlers (3),
d. Wiederholen der Schritte a. bis c.,
**dadurch gekennzeichnet, dass** die zweite Referenzspannung (U₂) grösser ist als die erste Referenzspannung (U₁), und dass basierend auf dem ersten Vergleicher-Ausgangssignal (PWM1) und dem zweiten Vergleicher-Ausgangssignal (PWM2) im Rahmen eines Auswerteprozesses (P1) eine Restspannung in der Gesamtkapazität (C_{T}) nach einer jeden Entladung und vor dem jeweils nachfolgenden erneuten Ladevorgang ausgewertet wird.

2. Verfahren nach Anspruch 1, **dadurch gekennzeichnet, dass** im Rahmen des Auswerteprozesses (P1) das erste Vergleicher-Ausgangssignal (PWM1) und das zweite Vergleicher-Ausgangssignal (PWM2) in Bezug gesetzt werden, um zu ermitteln,
B1 ob das Ausgangssignal (sₒᵤₜ₁) des ausgetauchten Fühlers (3) in einem Anfangsbereich (<Tx) schneller ansteigt als das Ausgangssignal (sₒᵤₜ₂) des eingetauchten Fühlers (3), und
B2 ob das Ausgangssignal (sₒᵤₜ₁) des ausgetauchten Fühlers (3) in einem Bereich nach dem Anfangsbereich (>Tx) langsamer ansteigt als das Ausgangssignal (sₒᵤₜ₂) des eingetauchten Fühlers (3), und
Ausgeben einer Detektion (Kf) einer Schaumgrenze (2.1), falls die Bedingungen B1 und B2 erfüllt sind.

3. Verfahren nach Anspruch 2, **dadurch gekennzeichnet, dass** die Schritte a. bis d. während des Ausführens der Auf- oder Abwärtsbewegung (B) des Fühlers (3) mehrfach durchlaufen werden, bis die Bedingungen B1 und B2 erfüllt sind.

4. Verfahren nach Anspruch 3, **dadurch gekennzeichnet, dass** die Schritte a. bis d. mit einer Taktrate wiederholt werden, die grösser ist als 10 kHz und vorzugsweise grösser ist als 100 kHz.

5. Verfahren nach einem der vorausgehenden Ansprüche, **dadurch gekennzeichnet, dass** das erste Vergleicher-Ausgangssignal (PWM1) und das zweite Vergleicher-Ausgangssignal (PWM2) durch den Einsatz zweier parallel geschalteter Vergleicher (VG1, VG2) bereitgestellt und durch ein Kontrollmodul (11) in Bezug gesetzt werden.

6. Verfahren nach Anspruch 1 oder 4, **dadurch gekennzeichnet, dass** es sich bei dem ersten Vergleicher-Ausgangssignal (PWM1) und dem zweiten Vergleicher-Ausgangssignal (PWM2) um pulsweiten-modulierte Signale handelt, die durch weitere Schaltungsblöcke, die auf der Ausgangsseite der Vergleicher (VG1, VG2) angeordnet sind, schaltungstechnisch in Bezug gesetzt werden.

7. Verfahren nach einem der vorausgehenden Ansprüche, **dadurch gekennzeichnet, dass** das erste Vergleicher-Ausgangssignal (PWM1) einem ersten Tiefpass-Filter (TP1) und das zweite Vergleicher-Ausgangssignal (PWM2) einem zweiten Tiefpass-Filter (TP2) zugeführt werden, um ein erstes Analogsignal (a₁(t)) und ein zweites Analogsignal (a₂(t)) zu erhalten.

8. Verfahren nach Anspruch 7, **dadurch gekennzeichnet, dass** das erste Analogsignal (a₁(t)) mittels eines ersten Bandpass-Filters (BP1) und das zweite Analogsignal (a₂(t)) mittels eines zweiten Bandpass-Filters (BP2) verarbeitet und die Ausgangssignale dieser Bandpass-Filter (BP1, BP2) schaltungstechnisch in Bezug gesetzt werden.

9. Vorrichtung (100) zur Detektion einer Schaumgrenze (2.1) in einem Behälter (5) umfassend
- den Behälter (5),
- einen Fühler (3), der in den Behälter (5) hinein und/oder aus dem Behälter (5) heraus bewegbar ist,
- einen Eingangssignalgenerator (E), der mit dem Fühler (3) verbindbar ist, um ein Eingangssignal (sᵢₙ(t)) bereitzustellen, das an dem Fühler (3) einen Lade-Entladevorgang erzeugt,
- eine kapazitiv arbeitende Messvorrichtung (M), die mit dem Fühler (3) verbindbar ist, um während des Lade-Entladevorgangs mindestens ein Ausgangssignal (sₒᵤₜ(t), sₒᵤₜ₁(t), sₒᵤₜ₂(t)) an dem Fühler (3) abzugreifen,
wobei
- der Fühler (3) während des Lade-Entladevorgangs periodisch ladbar und entladbar ist,
- das mindestens eine Ausgangssignal (sₒᵤₜ(t), sₒᵤₜ₁(t), sₒᵤₜ₂(t)) dem Zeitverlauf einer Lade-/Entladekurve (K1, K2) entspricht, die durch das periodische Laden und Entladen einer Gesamtkapazität (C_{T}) entsteht, wobei sich die Gesamtkapazität (C_{T}) aus dem Fühler (3), Luft, Schaum (2) und Flüssigkeit (1) bildet,
- die Vorrichtung (100) ein Schaltungsmodul (10, 11) mit zwei Vergleichern (VG1, VG2) umfasst, die dazu ausgelegt sind aus dem mindestens einen Ausgangssignal (sₒᵤₜ(t), sₒᵤₜ₁(t), sₒᵤₜ₂(t)) ein erstes Vergleicher-Ausgangssignal (PWM1) und ein zweites Vergleicher-Ausgangssignal (PWM2) bereitzustellen, wobei die beiden Vergleicher (VG1, VG2) parallel geschaltet sind, wobei der erste Vergleicher (VG1) dazu ausgelegt ist, das erste Vergleicher-Ausgangssignal (PWM1) bereitzustellen, falls das mindestens eine Ausgangssignal (sₒᵤₜ(t), sₒᵤₜ₁(t), sₒᵤₜ₂(t)) eine erste Referenzspannung (U₁) erreicht, und wobei der zweite Vergleicher (VG2) dazu ausgelegt ist, das zweite Vergleicher-Ausgangssignal (PWM2) bereitzustellen, falls das mindestens eine Ausgangssignal (sₒᵤₜ(t), sₒᵤₜ₁(t), sₒᵤₜ₂(t)) eine zweite Referenzspannung (U₂) erreicht,
**dadurch gekennzeichnet, dass** die zweite Referenzspannung (U₂) grösser ist als die erste Referenzspannung (U₁), und dass das Schaltungsmodul (10, 11) dazu ausgelegt ist, basierend auf dem ersten Vergleicher-Ausgangssignal (PWM1) und dem zweiten Vergleicher-Ausgangssignal (PWM2) im Rahmen eines Auswerteprozesses (P1) eine Restspannung in der Gesamtkapazität (C_{T}) nach einer jeden Entladung und vor dem jeweils nachfolgenden erneuten Ladevorgang auszuwerten.

10. Vorrichtung (100) nach Anspruch 9, **dadurch gekennzeichnet, dass** jeder der beiden Vergleicher (VG1, VG2) zum Bereitstellen je eines pulsweitenmodulierten Vergleicher-Ausgangssignals (PWM1, PWM2) ausgelegt ist und dass diese pulsweiten-modulierte Vergleicher-Ausgangssignale (PWM1, PWM2) durch ein Kontrollmodul (11) in Bezug setzbar sind.

11. Vorrichtung (100) nach Anspruch 9, **dadurch gekennzeichnet, dass** jeder der beiden Vergleicher (VG1, VG2) zum Bereitstellen je eines pulsweitenmodulierten Vergleicher-Ausgangssignals (PWM1, PWM2) ausgelegt ist und dass diese pulsweiten-modulierte Vergleicher-Ausgangssignale (PWM1, PWM2) durch weitere Schaltungselemente (TP1, TP2, BP1, BP2) in Bezug setzbar sind.

12. Vorrichtung (100) nach einem der Ansprüche 9 bis 11, **dadurch gekennzeichnet, dass** der Eingangssignalgenerator (E) dazu ausgelegt ist das Eingangssignal (sᵢₙ(t)) mit einer Taktrate bereitzustellen, die grösser ist als 10 kHz und die vorzugsweise grösser ist als 100 kHz.

13. Vorrichtung (100) nach Anspruch 9, **dadurch gekennzeichnet, dass** sie einen kapazitiven Spannungsteiler in Form einer Messbrücke umfasst.

## Claims

1. Method for detecting a foam boundary (2.1) in a container (5) of a device (100) by means of a capacitively operating measuring device (M) having a sensor (3) which can be moved, wherein at least one output signal (sₒᵤₜ(t)) is processed by the capacitively operating measuring device (M), wherein the method comprises the following steps which are carried out during the execution of an up or down movement (B) of the sensor (3) in the container (5);
a. performing a charging operation by predetermining an input signal (sᵢₙ(t)) which causes a charging operation at a total capacitance (C_{T}), wherein said total capacitance is formed from the sensor (3), air, foam (2) and liquid (1),
b. providing the at least one output signal (sₒᵤₜ₁(t), sₒᵤₜ₂(t)) at a first comparator (VG1) and at a second comparator (VG2), wherein the first comparator (VG1) is adapted to provide a first comparator output signal (PWM1) if the at least one output signal (sₒᵤₜ₁(t), sₒᵤₜ₂(t)) reaches a first reference voltage (U₁), and wherein the second comparator (VG2) is adapted to provide a second comparator output signal (PWM2) if the at least one output signal (sₒᵤₜ₁(t), sₒᵤₜ₂(t)) reaches a second reference voltage (U₂),
c. discharging the sensor (3),
d. repeating steps a. to c.,
**characterized in that** the second reference voltage (U₂) is greater than the first reference voltage (U₁), and that based on the first comparator output signal (PWM1) and the second comparator output signal (PWM2) a residual voltage in the total capacitance (C_{T}) is evaluated within the framework of an evaluation process (P1) after each discharge and before the respective subsequent new charging process.

2. Method according to claim 1, **characterized in that** the first comparator output signal (PWM1) and the second comparator output signal (PWM2) are correlated within the framework of the evaluation process (P1) in order to determine,
B1 whether the output signal (sₒᵤₜ₁) of the emerged sensor (3) rises faster in an initial range (<Tx) than the output signal (sₒᵤₜ₂) of the submerged sensor (3), and
B2 whether the output signal (sₒᵤₜ₁) of the emerged sensor (3) rises more slowly in a range after the initial range (>Tx) than the output signal (sₒᵤₜ₂) of the submerged sensor (3), and
outputting a detection (Kf) of a foam limit (2.1) if the conditions B1 and B2 are fulfilled.

3. Method according to claim 2, **characterized in that** steps a. to d. are repeated several times during the execution of the up or down movement (B) of the sensor (3) until the conditions B1 and B2 are fulfilled.

4. Method according to claim 3, **characterized in that** steps a. to d. are repeated with a clock rate which is greater than 10 kHz and preferably greater than 100 kHz.

5. Method according to one of the preceding claims, **characterized in that** the first comparator output signal (PWM1) and the second comparator output signal (PWM2) are provided by the use of two comparators (VG1, VG2) connected in parallel and are correlated by a control module (11).

6. Method according to claim 1 or 4, **characterized in that** the first comparator output signal (PWM1) and the second comparator output signal (PWM2) are pulse-width-modulated signals which are correlated in respect of circuitry by further circuit blocks which are arranged on the output side of the comparators (VG1, VG2).

7. Method according to one of the preceding claims, **characterized in that** the first comparator output signal (PWM1) is fed to a first low-pass filter (TP1) and the second comparator output signal (PWM2) is fed to a second low-pass filter (TP2) to obtain a first analog signal (a₁(t)) and a second analog signal (a₂(t)).

8. Method according to claim 7, **characterized in that** the first analog signal (a₁(t)) is processed by means of a first bandpass filter (BP1) and the second analog signal (a₂(t)) is processed by means of a second bandpass filter (BP2), and the output signals of these bandpass filters (BP1, BP2) are correlated in terms of circuitry.

9. Device (100) for detecting a foam boundary (2.1) in a container (5), comprising
- the container (5),
- a sensor (3) movable into and/or out of the container (5),
- an input signal generator (E) connectable to the sensor (3) to provide an input signal (sᵢₙ(t)) that generates a charge-discharge operation at the sensor (3),
- a measuring device (M) connectable to the sensor (3) to pick up at least one output signal (sₒᵤₜ(t), sₒᵤₜ₁(t), sₒᵤₜ₂(t)) from the sensor (3) during the charge-discharge process,
wherein
- the sensor (3) is periodically chargeable and dischargeable during the charge-discharge process,
- the at least one output signal (sₒᵤₜ(t), sₒᵤₜ(t), sₒᵤₜ₂(t)) corresponds to the time course of a charge/discharge curve (K1, K2) resulting from the periodic charging and discharging of a total capacitance (C_{T}), wherein said total capacitance is formed from the sensor (3), air, foam (2) and liquid (1),
- the device (100) comprises a circuit module (10, 11) with two comparators (VG1, VG2) designed to provide a first comparator output signal (PWM1) and a second comparator output signal (PWM2) from the at least one output signal (sₒᵤₜ(t), sₒᵤₜ₁(t), sₒᵤₜ₂(t)), wherein the two comparators (VG1, VG2) are connected in parallel, wherein the first comparator (VG1) is designed to provide the first comparator output signal (PWM1) if the at least one output signal (sₒᵤₜ(t), sₒᵤₜ₁(t), sₒᵤₜ₂(t)) reaches a first reference voltage (U₁), and wherein the second comparator (VG2) is designed to provide the second comparator output signal (PWM2) if the at least one output signal (sₒᵤₜ(t), sₒᵤₜ(t), sₒᵤₜ₂(t)) reaches a second reference voltage (U₂),
**characterized in that** the second reference voltage (U₂) is greater than the first reference voltage (U₁), and that the circuit module (10, 11) is designed to evaluate a residual voltage in the total capacitance (C_{T}) based on the first comparator output signal (PWM1) and the second comparator output signal (PWM2) within the framework of an evaluation process (P1) after each discharge and before the respective subsequent new charging process.

10. Device (100) according to claim 9, **characterized in that** each of the two comparators (VG1, VG2) is designed to provide a respective pulse-width-modulated comparator output signal (PWM1, PWM2) and that these pulse-width-modulated comparator output signals (PWM1, PWM2) can be correlated by a control module (11).

11. Device (100) according to claim 9, **characterized in that** each of the two comparators (VG1, VG2) is designed to provide a respective pulse-width-modulated comparator output signal (PWM1, PWM2) and that these pulse-width-modulated comparator output signals (PWM1, PWM2) can be correlated by further circuit elements (TP1, TP2, BP1, BP2).

12. Device (100) according to one of claims 9 to 11, **characterized in that** the input signal generator (E) is adapted to provide the input signal (sᵢₙ(t)) at a clock rate which is greater than 10 kHz and preferably greater than 100 kHz.

13. Device (100) according to claim 9, **characterized in that** it comprises a capacitive voltage divider in the form of a measuring bridge.

## Revendications

1. Procédé pour détecter une limite de mousse (2.1) dans un récipient (5) d'un dispositif (100) à l'aide d'un dispositif de mesure capacitif (M) avec un capteur (3) qui peut être déplacé, au moins un signal de sortie (Sₒᵤₜ(t)) étant traité par le dispositif de mesure capacitif (M), le procédé comprenant les étapes suivantes qui sont réalisées pendant l'exécution d'un mouvement de montée et de descente (B) du capteur (3) dans le récipient (5) ;
a. réaliser un processus de chargement en définissant un signal d'entrée (Sᵢₙ(t)) qui entraîne une capacité totale (CT) d'un processus de chargement, cette capacité totale se formant à partir du capteur (3), d'air, de mousse (2) et de liquide (1),
b. fournir le au moins un signal de sortie (Sₒᵤₜ₁(t), Sₒᵤₜ₂(t) à un premier comparateur (VG1) et à un deuxième comparateur (VG2), le premier comparateur (VG1) étant conçu pour fournir un premier signal de sortie de comparateur (PWM1) dans le cas où le au moins un signal de sortie (Sₒᵤₜ₁(t), Sₒᵤₜ₂(t)) atteint une première tension de référence (U₁), et le deuxième comparateur (VG2) étant conçu pour fournir un deuxième signal de sortie de comparateur (PWM2) dans le cas où le au moins un signal de sortie (Sₒᵤₜ₁(t), Sₒᵤₜ₂(t)) atteint une deuxième tension de référence (U₂),
c. décharger le capteur (3),
d. répéter les opérations a. à c.,
**caractérisé en ce que** la deuxième tension de référence (U₂) est supérieure à la première tension de référence (U₁), et **en ce que**, sur la base du premier signal de sortie de comparateur (PWM1) et du deuxième signal de sortie de comparateur (PWM2), on évalue dans le cadre d'un processus d'analyse (P1) une tension résiduelle dans la capacité totale (C_{T}) après déchargement et avant un nouveau processus de chargement.

2. Procédé selon la revendication 1, **caractérisé en ce que**, dans le cadre du processus d'analyse (P1), le premier signal de sortie de comparateur (PWM1) et le deuxième signal de sortie de comparateur (PWM2) sont mis en rapport pour déterminer
B1 si le signal de sortie (Sₒᵤₜ₁) du capteur non immergé (3) augmente plus rapidement dans une zone de départ (<Tx) que le signal de sortie (Sₒᵤₜ₂) du capteur immergé (3), et
B2 si le signal de sortie (Sₒᵤₜ₁) du capteur non immergé (3) monte plus lentement dans une zone après la zone de départ (>Tx) que le signal de sortie (Sₒᵤₜ₂) du capteur immergé (3), et
déclencher une détection (Kf) d'une limite de mousse (2.1) dans le cas où les conditions B1 et B2 sont remplies.

3. Procédé selon la revendication 2, **caractérisé en ce que** les étapes a. à d. sont effectuées plusieurs fois pendant l'exécution du mouvement de montée ou descente (B) du capteur (3), jusqu'à ce que les conditions B1 et B2 soient remplies.

4. Procédé selon la revendication 3, **caractérisé en ce que** les étapes a. à d. sont répétées à une fréquence qui est supérieure à 10 kHz et de préférence supérieure à 100 kHz.

5. Procédé selon l'une des revendications précédentes, **caractérisé en ce que** le premier signal de sortie de comparateur (PWM1) et le deuxième signal de sortie de comparateur (PWM2) sont fournis par l'utilisation de deux comparateurs (VG1, VG2) montés en parallèle et sont mis en rapport par un module de contrôle (11).

6. Procédé selon la revendication 1 ou 4, **caractérisé en ce que** le premier signal de sortie de comparateur (PWM1) et le deuxième signal de sortie de comparateur (PWM2) sont des signaux à modulation de largeur d'impulsion qui sont mis en rapport par technique de circuit par d'autres blocs circuits qui sont agencés sur le côté sortie des comparateurs (VG1, VG2).

7. Procédé selon l'une des revendications précédentes, **caractérisé en ce que** le premier signal de sortie de comparateur (PWM1) est amené à un premier filtre passe-bas (TP1) et le deuxième signal de sortie de comparateur (PWM2) à un deuxième filtre passe-bas (TP2) pour obtenir un premier signal analogique (a₁(t)) et un deuxième signal analogique (a₂(t)).

8. Procédé selon la revendication 7, **caractérisé en ce que** le premier signal analogique (a₁(t)) est traité par le biais d'un premier filtre passe-bande (BP1) et le deuxième signal analogique (a₂(t)) par le biais d'un deuxième filtre passe-bande (BP2) et **en ce que** les signaux de sortie de ces filtres passe-bande (BP1, BP2) sont mis en rapport par technique de circuit.

9. Dispositif (100) pour détecter une limite de mousse (2.1) dans un récipient (5) comprenant :
- le récipient (5),
- un capteur (3) pouvant être entré ou sorti du récipient (5),
- un générateur de signal d'entrée (E) pouvant être raccordé au capteur (3) pour fournir un signal d'entrée (Sin(t)) qui produit un processus de chargement/déchargement au niveau du capteur (3),
- un dispositif de mesure (M) pouvant être raccordé au capteur (3) pour prélever au moins un signal de sortie (Sₒᵤₜ(t), Sₒᵤₜ₁(t), Sₒᵤₜ₂(t)) au niveau du capteur (3) pendant le processus de chargement/déchargement,
dans lequel
- le capteur (3) peut être chargé et déchargé périodiquement pendant le processus de chargement/déchargement,
- le au moins un signal de sortie (Sₒᵤₜ(t), Sₒᵤₜ₁(t), Sₒᵤₜ₂(t)) correspond au cours du temps d'une courbe de chargement/déchargement (K1, K2) qui résulte du chargement et déchargement périodique d'une capacité totale (C_{T}), cette capacité totale se formant à partir du capteur (3), d'air, de mousse (2) et de liquide (1),
- le dispositif (100) comprend un module de commutation (10, 11) avec deux comparateurs (VG1, VG2) qui sont conçus pour fournir un premier signal de sortie de comparateur (PWM1) et un deuxième signal de sortie de comparateur (PWM2) à partir du au moins un signal de sortie (sₒᵤₜ(t), Sₒᵤₜ₁(t), sₒᵤₜ₂(t)), les deux comparateurs (VG1, VG2) étant montés en parallèle, le premier comparateur (VG1) étant conçu pour fournir le premier signal de sortie de comparateur (PWM1) dans le cas où le au moins un signal de sortie (Sₒᵤₜ(t), Sₒᵤₜ₁(t) Sₒᵤₜ₂(t) atteint une première tension de référence (U₁), et le deuxième comparateur (VG2) étant conçu pour fournir le deuxième signal de sortie de comparateur (PWM2) dans le cas où le au moins un signal de sortie (Sₒᵤₜ(t), Sₒᵤₜ₁(t), Sₒᵤₜ₂(t)) atteint une deuxième tension de référence (U₂),
**caractérisé en ce que** la deuxième tension de référence (U₂) est supérieure à la première tension de référence (U₁), et **en ce que** le module de commutation (10, 11) est conçu pour évaluer, dans le cadre d'un processus d'analyse (P1), une tension résiduelle dans la capacité totale (C_{T}) après chaque déchargement et avant un nouveau processus de chargement, sur la base du premier signal de sortie de comparateur (PWM1) et du deuxième signal de sortie de comparateur (PWM2).

10. Dispositif (100) selon la revendication 9, **caractérisé en ce que** chacun des deux comparateurs (VG1, VG2) est conçu pour fournir un signal de sortie de comparateur à modulation de largeur d'impulsion (PWM1, PWM2) et **en ce que** ces signaux de sortie de comparateur à modulation de largeur d'impulsion (PWM1, PWM2) peuvent être mis en rapport par un module de contrôle (11).

11. Dispositif (100) selon la revendication 9, **caractérisé en ce que** chacun des deux comparateurs (VG1, VG2) est conçu pour fournir un signal de sortie de comparateur à modulation de largeur d'impulsion (PWM1, PWM2) et **en ce que** ces signaux de sortie de comparateur à modulation de largeur d'impulsion (PWM1, PWM2) peuvent être mis en rapport par d'autres éléments de commutation (TP1, TP2, BP1, BP2).

12. Dispositif (100) selon l'une des revendications 9 à 11, **caractérisé en ce que** le générateur de signal d'entrée (E) est conçu pour fournir le signal d'entrée (Sᵢₙ(t)) avec une fréquence supérieure à 10 kHz, de préférence supérieure à 100 kHz.

13. Dispositif (100) selon la revendication 9, **caractérisé en ce qu'**il comprend un diviseur de tension capacitif sous la forme d'un pont de mesure.
